# EUROPÄISCHE PATENTSCHRIFT

(11) **EP 0 434 629 B1**
(45) Veröffentlichungstag und Bekanntmachung des Hinweises auf die Patenterteilung: **05.03.1997**
(21) Anmeldenummer: 90811003.4
(22) Anmeldetag: 18.12.1990
(51) Int. Cl.: H04J 3/12

(54) **Verfahren und Anordnung zur Verarbeitung von Signalisierinformation in konfigurierbaren Multiplexern**
Method and apparatus for processing the signalling information within configurable multiplexers
Méthode et circuit de traitement d'information de signalisation dans des multiplexeurs

(30) Priorität: 19.12.1989 CH 4551/89
(43) Veröffentlichungstag der Anmeldung: 26.06.1991
(73) Patentinhaber: Alcatel Schweiz AG, 8055 Zürich (CH); ALCATEL N.V., NL-1077 XX Amsterdam (NL)
(72) Erfinder: Rickenbach, Hans Ernst, CH-8038 Zürich (CH); Zumsteg, Michael, CH-5426 Lengnau (CH)

(56) Entgegenhaltungen:
- US-A- 4 002 846
- US-A- 4 701 913

## Beschreibung

Die vorliegende Erfindung betrifft ein Verfahren zur kanalsynchronen Vermittlung der Signalisierinformation in konfigurierbaren digitalen Multiplexern gemäss dem Oberbegriff des ersten Anspruchs, sowie eine Schaltungsanordnung zur Durchführung dieses Verfahrens.

In digitalen Verbindungsleitungsnetzen stellt sich die Aufgabe, in den Knoten die einzelnen Kanäle oder Zeitschlitze der angeschlossenen PCM-Zeitmultiplex-Vielfachleitungen gemäss einer gewünschten Netzkonfiguration beliebig zu rangieren, wobei diese Konfiguration über kürzere oder längere Zeit bestehen bleibt und die PCM-Vielfachleitungen pro örtliche Richtung zu einem Multiplex höherer Ordnung zusammengefasst sein können.

Die nachfolgende Beschreibung bezieht sich aussschliesslich auf Vielfachleitungen, die je Uebertragungsrichtung über einen getrennten Pfad mit 32 Kanälen von je 64 kBit/s verfügen, was einer Bitrate von 2 × 2048 kbit/s entspricht. 30 dieser 32 Kanäle werden für die Uebermittlung von Sprachbytes verwendet, ein Kanal (Zeitschlitz Nr. 0) ist für die Synchronisierung und ein Meldewort reserviert und ein Kanal (Zeitschlitz Nr. 16) dient als Signalisierkanal.

Für den Fachmann ist es jedoch klar, dass die nachfolgenden Ausführungen auch auf Zeitmultiplexe mit anderer, insbesondere höherer Kanalzahl anwendbar sind. Dies gilt solange, als auf Zeitschlitzebene rangiert werden kann, d.h. pro Zeitschlitz nur ein Nutzsignalkanal vorhanden ist und pro Signalisierzeitschlitz eines Rahmens die Signalisierinformation von zwei Nutzsignalkanälen übertragen wird.

Die Rangierung von einzelnen Zeitschlitzen bedingt natürlich eine Neuanordnung der Zeitschlitze innerhalb der Multiplexe der einzelnen angeschlossenen Vielfachleitungen. Zu jedem dieser Kanäle gehört auch eine Signalisierinformation, die separat für die Kanäle einer PCM-Vielfachleitung gemäss CCITT-Protokoll Nr. 7 im Zeitschlitz Nr. 16 übertragen wird.

Die Durchschaltung und Neubildung der Multiplexe besorgen sog. intelligente Primärmultiplexer, die in der Lage sind, die einzelnen 64 kbit/s-Kanäle von mehreren ankommenden und abgehenden 2,048 Mbit/s-Signalen, im folgenden als 2 Mbit/s-Signale bezeichnet, untereinander beliebig auszutauschen. Als Schaltelemente werden im allgemeinen handelsübliche integrierte grierte Schaltungen verwendet, die in der Lage sind, vollständige Bytes zu rangieren, zum Beispiel ein "Digital Switch" MT8980, beschrieben im "Microelectronics Digital Communications Handbook" der MITEL Corporation. Diese Bytes sind dabei identisch mit den Datenwörtern in den Zeitschlitzen der nach CEPT normierten 2 Mbit/s-Rahmenstruktur.

Die ankommenden 2 Mbit/s-Signale werden üblicherweise durch eine Vorfeldeinrichtung in zwei neue Bitströme aufgeteilt, die ebenfalls das CEPT-Rahmenformat von 32 Zeitschlitzen mit je 8 Bits aufweisen. Einer dieser Bitströme ist im Aufbau identisch mit dem ankommenden 2 Mbit/s-Signal, bei welchem jedem 64 kbit/s-Kanal ein bestimmter Zeitschlitz zugeordnet ist. Der andere Bitstrom enthält innerhalb eines Rahmens die Aneinanderreihung aller Zeitschlitze Nr. 16 eines CEPT-Ueberrahmens und damit die Signalisierinformation für alle 30 Nutzsignalkanäle mit je 64 kbit/s. Beschrieben sind der Aufbau und die Funktionalität derartiger Kernteile von Multiplexern zum Beispiel in der Kundendokumentation des Herstellers, wie etwa in der zum Alcatel 1511 MX PCM Multiplexer gehörenden "Product Specification" für die Baugruppe der Zeitschlitzrangierung, des PCMC2 genannten "PCM Controllers" mit Dokument Nr. 772 52102 AXXA ···· .

Nun enthält aber jedes der einem Zeitschlitz des oben erwähnten zweiten Bitstromes entsprechende Byte die Signalisierinformation für zwei Kanäle. Es ist somit nicht möglich, diese Signalisierbytes durch das Schaltelement in gleicher Weise wie die Sprachbytes rangieren zu lassen.

Eine bekannte Lösung für dieses Problem ist in der Regel im Schaltelement inhärent vorhanden, in dem es eine prozessorkonforme Schnittstelle für den Zugang zu jedem einzelnen ankommenden und abgehenden Bit anbietet. Mit Hilfe dieser Schnittstelle ist es möglich, die Signalisierinformation als 8 Bit- Wörter auszulesen, in einem ohnehin vorhandenen Prozessor zwischenzuspeichern und als 4 Bit-Wort neu geordnet im richtigen halben Zeitschlitz des abgehenden Bitstromes wieder einzusetzen.

Diese Lösung belastet jedoch den Prozessor ganz wesentlich, wobei die Last umso grösser ist, je häufiger sich die Signalisierinformation der ankommenden Kanäle ändert. Je nach Verarbeitungskapazität des Prozessors kann kann dies bei gleichzeitiger Zustandsänderungen von mehreren Signalisierwörtern zu Impulsverzerrungen der Signalisierinformation führen.

Zur Verminderung der vorgenannten Prozessorlast wurde bereits eine Lösung angewandt, bei welcher mit Hilfe einer zusätzlichen Schaltungsanordnung Zustandsänderungen in den Signalisierwörtern detektiert werden, so dass der Prozessor vom laufenden Vergleich zwischen alter und neuer Signalisierinformation befreit wird und nur aktiv werden muss, wenn die Signalisierbits verändert werden müssen und/oder wenn infolge Neukonfiguration des Netzes die Adressierung (Rangierung) geändert werden muss.

Es ist nun Aufgabe der Erfindung, ein Verfahren zur kanal synchronen Vermittlung der Signalisierinformation in einem digitalen Primärmultiplexer anzugeben, das die vorerwähnten Nachteile vermeidet.

Gelöst wird diese Aufgaben durch die im kennzeichnenden Teil des ersten Anspruchs genannten Merkmale. Vorteilhafte Weiterbildungen der Erfindung können den abhängigen Ansprüchen entnommen werden.

Ein Ausführungsbeispiel der Erfingung wird nun anhand der Zeichnung näher erläutert. In der Zeichnung zeigt:
- Fig. 1: ein Blockschema der erfindungsgemässen Schaltungsanordnung zur kanalsynchronen Vermittlung der Signalisierinformation;
- Fig. 2: die Rahmenstruktur des zusammengefassten Signalisierungsbitstromes vor, in und nach der Schaltungsanordnung nach Fig. 1; und
- Fig. 3: ein Diagramm der Steuersignale für die Schaltungsanordnung nach Fig. 1.

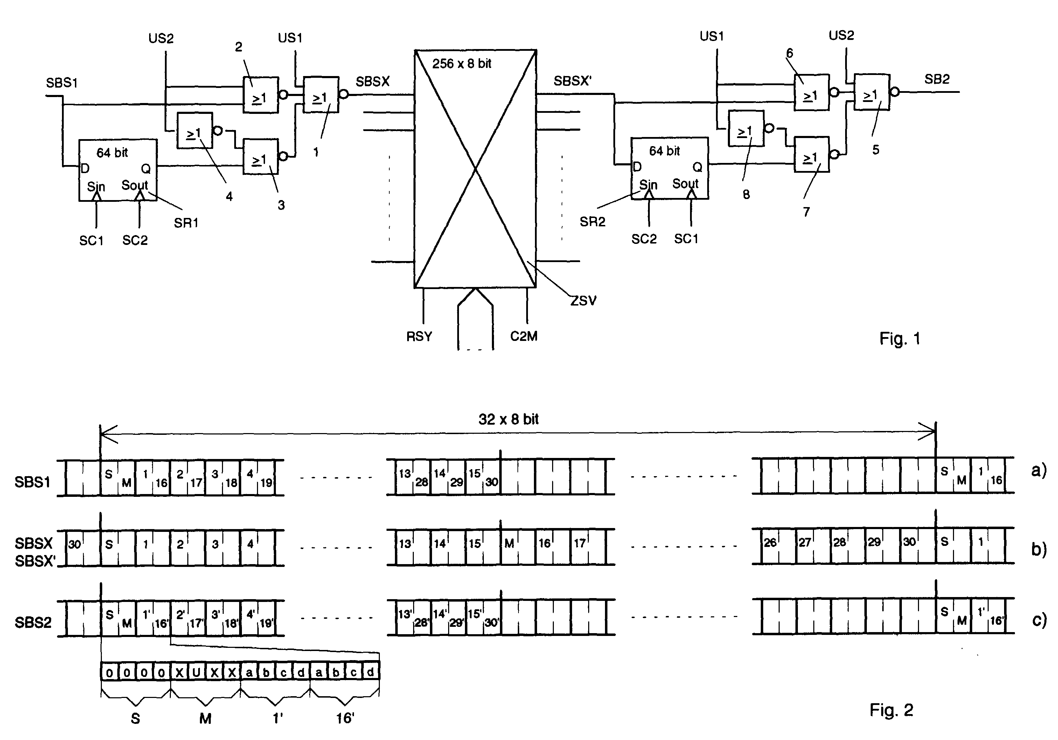

Die ganze nachfolgende Beschreibung beschränkt sich auf eine Uebertragungsrichtung, für die andere Uebertragungsrichtung, die über einen getrennten Pfad verläuft, sind die Abläufe identisch gleich, so dass auf eine Beschreibung verzichtet werden kann. Die in Fig. 1 gezeigte Schaltungsanordnung besteht aus einem Zeitschlitzverteiler ZSV, einem Schieberegister SR1 und einer aus NOR-Toren 1-3 und einem Inverter 4 bestehenden Schaltlogik auf der Eingangsseite sowie einem Schieberegister SR2 und einer aus NOR-Toren 5-7 und einem Inverter 8 bestehenden Schaltlogik auf der Ausgangsseite. Der Verteiler ZSV ist, wie in der Einleitung bereits erwähnt, eine handelsübliche integrierte Schaltung, an welche sowohl auf der Eingangsseite wie auch auf der Ausgangsseite im vorliegenden Beispiel je acht 2 Mbit/s- Vielfachleitungen mit je 32 Kanälen oder Zeitschlitzen angeschlossen werden können. Der Verteiler ist durch ein Programm so konfigurierbar, dass jedes der 8 × 32 = 256 auf der Eingangsseite ankommenden Bytes mit einer Länge von 8 Bits in einem beliebigen Zeitschlitz der acht ausgangsseitig angeschlossenen Vielfachleitungen abgegeben werden kann.

Wie bereits erwähnt, wird für die Rangierung der Sprachbytes die gleiche integrierte Schaltung als Zeitschlitzverteiler verwendet. In der nachfolgenden Beschreibung soll nun gezeigt werden, wie mit Hilfe der Schaltung nach Fig. 1 erreicht werden kann, dass die Signalisierinformationen genau gleich wie die Sprachbytes rangiert werden können, d.h. dass der Verteiler ZSV mit dem gleichen Programm für die Konfiguration geladen werden kann wie jener für die Sprachbytes und mit diesem synchron mit den gleichen Steuersignalen betrieben werden kann.

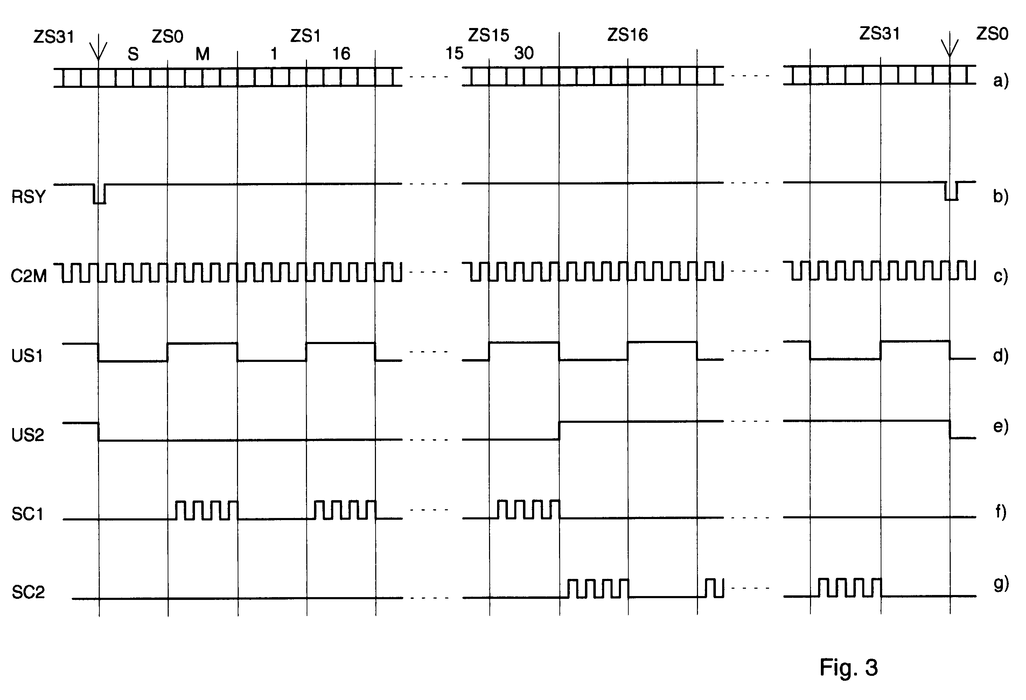

Der in Fig. 2a gezeigte Signalisierbitstrom SBS1, der in Fig. 3a mit der Auflösung in Einzelbits gezeigt ist, enthält hintereinandergereiht den Inhalt der Zeitschlitze 16 eines Ueberrahmens des Leitungssignales. Da, wie bereits erwähnt, jeder Zeitschlitz 16 die Signalisierinformation für zwei Sprachkanäle enthält, d.h. 4 Bits pro Sprachkanal, füllt diese Aneinanderreihung zusammen mit einem Synchronwort S und einem Meldewort M nur den halben Rahmen aus. Der Bitstrom SBS1 gelangt parallel an das Schieberegister SR1 und an die eingangsseitige Schaltlogik. Steuersignale SC1 und US2 (Fig. 3f und 3e) sorgen dafür, dass die jeweils ersten vier Bits eines Signalisierbytes direkt zum Verteiler ZSV durchgelassen werden, während die jeweils zweiten vier Bits jedes Signalisierbytes in das Schieberegister SR1 eingelesen werden, wobei gleichzeitig ein während dieser vier Bits am NOR-Tor 1 anliegendes Signal US1 (Fig. 3d) dieses Tor für die Eingabe in den Verteiler ZSV sperrt. Dadurch entsteht die erste Hälfte des in Fig. 2b gezeigten Bitstromes SBSX. Zu dem durch die etwas verlängerte Trennlinie angedeuteten Zeitpunkt in der Mitte des Rahmens wechselt das Signal US2, so dass NOR-Tor 2 gesperrt und NOR-Tor 3 freigegeben wird. Mit Hilfe des Signales SC2 (Fig. 3g) werden wieder in der Position der ersten vier Bits jedes Signalisierbytes vier Bits aus dem Schieberegister ausgelesen und an den Verteiler ZSV angelegt. Auch hier sorgt das Signal US1 dafür, dass das NOR-Tor 1 während der zweiten vier Bits gesperrt ist. Dadurch entsteht die zweite Hälfte des nun vollständigen Bitstromes SBSX, welcher nun für die Signalisierinformation die gleiche normalisierte CEPT-Rahmenstruktur wie die Sprachkanäle aufweist. Die in Fig. 3b und 3c gezeigten Signale RSY und C2M dienen zur Synchronisierung und zum Takten des Verteilers ZSV.

Auf der Ausgangsseite des Verteilers ZSV erscheint der Bitstrom SBSX', der das genau gleiche Format aufweist wie der Bitstrom SBSX, jedoch mit durch die Rangierung im Verteiler ZSV veränderter Information. Dieser Bitstrom muss für die weitere Verarbeitung wieder in die für die Signalisierung vorgesehene Struktur gebracht werden, d.h. in jedem der Zeitschlitze 0-15 müssen wieder die Signalisierinformation für je zwei Kanäle untergebracht werden. Dies geschieht durch eine genau gleiche Schaltung wie auf der Eingangsseite und mit den gleichen Steuersignalen, allerdings sind die Anschlüsse von SC1 und SC2 bezw. US1 und US2 vertauscht.

Die Signale US1 und US2 lassen die jeweils ersten vier Bits jedes Zeitschlitzes 0-15, d.h. der ersten Hälfte des Rahmens direkt durch, während das Signal SC2 das Einlesen der 4 Bit-Pakete der zweiten Hälfte des Rahmens des Bitstromes SBSX' in das Schieberegister SR2 steuert, wobei gleichzeitig das Signal US2 am NOR-Tor 5 dafür sorgt, dass dieses während der zweiten Hälfte des Rahmens gesperrt ist. Signal SC1 steuert das Auslesen aus dem Schieberegister SR2, wobei das Signal US1 gleichzeitig NOR-Tor 6 sperrt und NOR-Tor 7 über den Inverter 8 freigibt. Als Ergebnis entsteht der in Fig. 2 c gezeigte Signalisierbitstrom SBS2, der wieder das Format des Bitstromes SBS1 aufweist.

Da die als Zeitschlitzverteiler verwendete integrierte Schaltung mehrere (in Fig. 1 acht) ankommende und abgehende Bitströme bedient, die aber in ihrer Rahmenstruktur alle zueinander zeitlich synchron sind, kann als Schieberegister auf der Eingangs- und Ausgangsseite je ein FIFO-Register (First-In, First-Out) entsprechender Breite (im gezeigten Beispiel mit 8 parallelen Pfaden) verwendet werden. Die Verarbeitung der verschiedenen Bitströme erfolgt für alle Pfade parallel und zeitlich miteinander im gleichen Takt.

Die in Fig. 3 gezeigten Steuersignale sind Beispiele. Die Ein- und Auslese- Taktsignale müssen je nach Fabrikat des Schieberegisters eventuell invertiert sein. Auch kann gegebenenfalls einer der mit den Signalen US1 bezw. US2 gesteuerten Schalter wegfallen, da bei einzelnen Fabrikaten der Ausgang des Schieberegisters direkt geschaltet werden kann.

## Patentansprüche

1. Verfahren zur kanal synchronen Verarbeitung der Signalisierinformation in konfigurierbaren digitalen Multiplexern, an welche eine Anzahl von ankommenden und abgehenden PCM-Vielfachleitungen mit einer Rahmenstruktur von M Zeitschlitzen mit je 2·Q Bits angeschlossen sind, deren Zeitschlitze untereinander zu rangieren sind, wobei pro Leitung mindestens ein Zeitschlitz der Uebertragung eines Synchronisiersignales oder Meldewortes und mindestens ein Zeitschlitz der Uebertragung der Signalisierinformation der in den verbleibenden Zeitschlitzen untergebrachten Nutzsignalkanäle dient, indem pro Signalisierzeitschlitz eines Rahmens die Signalisierinformation von zwei Nutzsignalkanälen übermittelt wird, und wobei durch eine Vorfeldeinrichtung eingangsseitig der Inhalt der Signalisierzeitschlitze eines Ueberrahmens zu einem Signalisierbitstrom aneinandergereiht und ausgangsseitig wieder auf die der Signalisierung dienenden Zeitschlitze aufgeteilt wird, gekennzeichnet durch folgende Verfahrensschritte:
- umordnen der im Signalisierbitstrom (SBS1) aneinandergereihten Signalisierinformation in einen Rahmen mit M Zeitschlitzen, wobei jeweils die Signalisierinformation eines bestimmten Nutzsignalkanals im diesem Nutzsignalkanal entsprechenden Zeitschlitz der Rahmenstruktur der angeschlossenen Leitung plaziert wird;
- rangieren der Zeitschlitze des umgeordneten Signalisierbitstroms (SBSX) in gleicher Weise wie der Bitstrom der Nutzinformation, und
- umordnen des rangierten Signalisierbitstroms (SBX') in einen konzentrierten Signalisierbitstrom (SBS2) mit aneinandergereihter Signalisierinformation, wobei jeweils die Signalisierinformation eines bestimmten Nutzsignalkanals im diesem Nutzsignalkanal entsprechenden Zeitschlitz der Rahmenstruktur der aneinandergereihten Signalisierinformation plaziert wird.

2. Verfahren nach Anspruch 1, gekennzeichent durch das Plazieren der Signalisierinformation vom Signalisierbitstrom (SBS1) in den umgeordneten Signalisierbitstrom (SBSX) durch Belassen der jeweils ersten Q Bits in jedem Zeitschlitz der ersten Hälfte des Rahmens, Zwischenspeichern der jeweils zweiten Q Bits aus jedem Zeitschlitz der ersten Hälfte des Rahmens und Auslesen der gespeicherten Bits in der Reihenfolge des Einlesens in jeweils die ersten Q Bitpositionen der Zeitschlitze der zweiten Hälfte des Rahmens, sowie durch das Plazieren der Signalisierinformation vom rangierten Signalisierbitstrom (SBSX') in den konzentrierten Signalisierbitstrom (SBS2) durch Belassen der in der ersten Hälfte des Rahmens enthaltenen Signalisierinformation, Zwischenspeichern der in der zweiten Hälfte des Rahmens enthaltenen Signalisierinformation und Auslesen der gespeicherten Bits in der Reihenfolge des Einlesens in jeweils die zweiten Q Bitpositionen der Zeitschlitze in der ersten Hälfte des folgenden Rahmens.

3. Verfahren nach Anspruch 2, dadurch gekennzeichnet, dass M = 32 und Q = 4 beträgt.

4. Schaltungsanordnung zur Durchführung des Verfahrens nach Anspruch 2 in einem konfigurierbaren digitalen Multiplexer für die Rangierung von PCM-Vielfachleitungen mit einer Vorfeldeinrichtung zur Extraktion des Signalisierbitstroms als Aneinanderreihung der Signalisierinformation aller Kanäle einer PCM-Vielfachleitung und zur Wiedereinfügung der rangierten Signalisierinformation und mit einem Zeitschlitzverteiler zur Rangierung der Kanäle mehrerer PCM-Vielfachleitungen, dadurch gekennzeichnet, dass jede Verbindung von der Vorfeldeinrichtung zum Zeitschlitzverteiler (ZSV) für den extrahierten Signalisierbitstrom (SBS1) und jede Verbindung vom Zeitschlitzverteiler (ZSV) zur Vorfeldeinrichtung für den rangierten Signalisierbitstrom (SBSX') sowohl direkt als auch über einen FIFO-Speicher (SR1, SR2) auf eine Schaltlogik (1-4, 5-8) verzweigt und durch diese wieder zusammengeführt wird.

## Claims

1. Method for the channel-synchronous processing of signalling information in configurable digital multiplexers to which a number of incoming and outgoing PCM multiple lines are connected which have a frame structure of M time slots comprising 2·Q bits each, the time slots of which PCM multiple lines are to be switched with respect to one another, at least one time slot per line serving to transmit a synchronizing signal or service word and at least one time slot per line serving to transmit signalling information of the useful-signal channels accommodated in the remaining time slots by transmitting the signalling information of two useful-signal channels for each signalling time slot of a frame, and the content of the signalling time slots of a superframe being strung together to form a signalling bit stream by a front-end device on the input side and being distributed again on the output side over the time slots serving for signalling, characterized by the following method steps:
- rearrangement of the signalling information strung together in the signalling bit stream (SBS1) into a frame having M time slots, the signalling information of a particular useful-signal channel being placed in that time slot of the frame structure of the connected line that corresponds to said useful-signal channel;
- switching of the time slots of the rearranged signalling bit stream (SBSX) in the same way as the bit stream of the useful information, and
- rearrangement of the switched signalling bit stream (SBX') into a concentrated signalling bit stream (SBS2) comprising strung-together signalling information, the signalling information of a particular useful-signal channel being placed in each case in that time slot of the frame structure of the strung-together signalling information that corresponds to said useful-signal channel.

2. Method according to Claim 1, characterized by the placing of the signalling information of the signalling bit stream (SBS1) in the rearranged signalling bit stream (SBSX) by leaving the first Q bits as they are in each respective time slot of the first half of the frame, temporary storage of the second Q bits in each case from every time slot of the first half of the frame and reading-out of the stored bits in the sequence of the reading-in into the respective first Q bit positions of the time slots of the second half of the frame, and also by placing the signalling information of the switched signalling bit stream (SBSX') in the concentrated signalling bit stream (SBS2) by leaving as it is the signalling information contained in the first half of the frame, temporary storage of the signalling information contained in the second half of the frame and reading-out of the stored bits in the sequence of the reading-in into the respective second Q bit positions of the time slots in the first half of the following frame.

3. Method according to Claim 2, characterized in that M = 32 and Q = 4.

4. Circuit arrangement for carrying out the method according to Claim 2 in a configurable digital multiplexer for the arranging of PCM multiple lines comprising a front-end device for the extraction of the signalling bit stream as a stringing-together of the signalling information of all the channels of a PCM multiple line and for the reinsertion of the switched signalling information and comprising a time-slot distributor for switching the channels of a plurality of PCM multiple lines, characterized in that every connection of the front-end device to the time-slot distributor (ZSV) for the extracted signalling bit stream (SVS1) and every connection of the time-slot distributor (ZSV) to the front-end device for the switched signalling bit stream (SBSX') is fanned both directly and via an FIFO memory (SR1, SR2) onto a switching logic (1 - 4, 5 - 8) and is brought together again by the latter.

## Revendications

1. Procédé de traitement à canaux synchronisés de l'information de signalisation dans des miltiplexeurs numériques configurables, auxquels sont raccordés un certain nombre de bus PCM entrant et sortant comportant une structure de trame de M créneaux temporels de chacun 2·Q bits, dont les créneaux temporels sont à trier, dans lequel, par ligne, au moins un créneau temporel sert à la transmission d'un signal de synchronisation ou d'un mot-message et au moins un créneau temporel sert à la transmission de l'information de signalisation des canaux à signal utile logés dans les créneaux temporels restants, tandis que par créneau temporel de signalisation d'une trame, l'information de signalisation est transmise par deux canaux à signal utile, et dans lequel, grâce à un dispositif de champ préliminaire, du côté de l'entrée le contenu des créneaux temporels de signalisation d'une surtrame est aligné en un train de bits de signalisation et du côté de la sortie est de nouveau réparti sur les créneaux temporels servant à la signalisation, caractérisé par les étapes de procédé suivantes :
- réarrangement de l'information de signalisation alignée dans le train de bits de signalisation (SBS1) dans une trame comportant M créneaux temporels, l'information de signalisation d'un canal à signal utile déterminé étant à chaque fois placée dans le créneau temporel, correspondant à ce canal à signal utile, de la structure de trame de la ligne raccordée ;
- tri des créneaux temporels du train de bits de signalisation réarrangé (SBSX) de la même manière que le train de bits de l'information de signalisation utile, et
- réarrangement du train de bits de signalisation trié (SBX') en un train de bits de signalisation concentré (SBS2) avec l'information de signalisation alignée, l'information de signalisation d'un canal à signal utile déterminé étant placée dans un créneau temporel correspondant à ce canal à signal utile de la structure de trame de l'information de signalisation alignée.

2. Procédé selon la revendication 1, caractérisé par le placement de l'information de signalisation d'un train de bits de signalisation (SBS1) dans le train de bits de signalisation réarrangé (SBSX) en laissant les Q premiers bits respectivement dans chaque créneau temporel de la première moitié de la trame, en enregistrant temporairement les Q deuxièmes bits respectivement à partir de chaque créneau temporel de la première moitié de la trame, en lisant les bits enregistrés dans l'ordre d'enregistrement dans respectivement les premières positions des Q bits des créneaux temporels de la deuxième moitié de la trame, ainsi que par le placement de l'information de signalisation du train de bits de signalisation trié (SBSX') dans le train de bits de signalisation concentré (SBS2) en laissant l'information de signalisation contenue dans la première moitié de la trame, en enregistrant temporairement l'information de signalisation contenue dans la deuxième moitié de la trame et en lisant des bits enregistrés dans l'ordre d'enregistrement dans respectivement les deuxièmes positions des Q bits des créneaux temporels dans la première moitié de la trame suivante.

3. Procédé selon la revendication 2, caractérisé en ce que M = 32 et Q = 4.

4. Circuits destinés à la mise en oeuvre du procédé selon la revendication 2 dans un multiplexeur numérique configurable pour le tri de bus PCM, comportant un dispositif de champ préliminaire pour l'extraction du train de bits de signalisation en tant qu'alignement de l'information de signalisation de tous les anaux d'un bus PCM et pour la réinsertion de l'infcrmation de signalisation triée et comportant un répartiteur de créneaux temporels destiné au tri des canaux de plusieurs bus PCM, caractérisé en ce que chaque liaison du dispositif de champ préliminaire au répartiteur de créneaux temporels (ZSV) pour le train de bits de signalisation extrait (SBS1) et chaque liaison du répartiteur de créneaux temporels (ZSV) au dispositif de champ préliminaire pour le train de bits de signalisation trié (SBSX') est dérivée aussi bien directement que par l'intermédiaire d'une mémoire FIFO (SR1, SR2) sur une logique de commutation (1 à 4, 5 à 8) et est de nouveau réunie par celle-ci.
